# DEMANDE DE BREVET EUROPEEN

(11) **EP 4 782 328 A1**
(43) Date de publication de la demande: **29.07.2026**
(21) Numéro de dépôt: 26154000.9
(22) Date de dépôt: 26.01.2026
(51) Int. Cl.: B64C 3/46, B64C 7/00, B64D 15/16

(54) **AÉRONEF COMPRENANT AU MOINS UNE STRUCTURE AÉRODYNAMIQUE GONFLABLE**

(30) Priorité: 28.01.2025 FR 2500857
(71) Demandeur: AIRBUS OPERATIONS (S.A.S.), 31060 Toulouse (FR)
(72) Inventeur: MAZARS, Vincent, 31060 TOULOUSE (FR)
(74) Mandataire: Fantin, Laurent

(57) **Abrégé**

L'invention a pour objet un aéronef comprenant au moins un support (24), au moins une structure aérodynamique (22) gonflable qui présente au moins une surface aérodynamique (S22) ainsi qu'au moins un système de liaison (26) reliant la structure aérodynamique (22) et le support (24). Cette structure aérodynamique (22) comprend au moins une paroi souple (28) présentant une face externe (S28) ainsi qu'au moins une cavité (30) gonflable délimitée au moins partiellement par la paroi souple (28) et configurée pour occuper un état gonflé dans lequel la cavité (30) présente un volume maximal et un état dégonflé dans lequel la cavité (30) présente un volume inférieur au volume maximal, la face externe (S28) formant au moins une partie de la surface aérodynamique (S22) lorsque la cavité (30) est à l'état gonflé.

## Description

La présente demande se rapporte à un aéronef comprenant au moins une structure aérodynamique gonflable.

Un aéronef comprend des structures aérodynamiques comme un carénage par exemple configurées pour optimiser l'écoulement de l'air autour de l'aéronef et réduire sa traînée. A titre d'exemple, une structure aérodynamique qui n'assure pas de fonction mécanique et la transmission d'efforts, dite également non-structurelle, peut être une structure de type Karman située à la jonction reliant l'aile et le fuselage de l'aéronef.

Selon un mode de réalisation, une telle structure aérodynamique comprend une paroi rigide formant une partie de la peau de l'aéronef ainsi qu'une structure secondaire, sur laquelle repose la paroi, lui conférant une certaine rigidité. La paroi est réalisée à partir d'une plaque rigide métallique ou en matériau composite conformée en fonction de la forme géométrique tridimensionnelle souhaitée pour la paroi. En complément, la structure secondaire est métallique ou en matériau composite et fabriquée de manière à épouser la forme géométrique tridimensionnelle de la paroi.

Ces structures aérodynamiques présentent généralement une masse volumique importante. Par ailleurs, compte tenu de leurs formes géométriques complexes, de telles structures aérodynamiques sont complexes à fabriquer et à installer. Enfin, elles sont généralement sensibles aux impacts et difficiles à réparer.

La présente invention vise à remédier à tout ou partie des inconvénients de l'art antérieur. A cet effet, l'invention a pour objet un aéronef comprenant au moins un support, au moins une structure aérodynamique qui présente au moins une surface aérodynamique ainsi qu'au moins un système de liaison reliant la structure aérodynamique et le support.

Selon l'invention, la structure aérodynamique comprend au moins une paroi souple présentant une face externe ainsi qu'au moins une cavité gonflable délimitée au moins partiellement par la paroi souple et configurée pour occuper un état gonflé dans lequel la cavité présente un volume maximal et un état dégonflé dans lequel la cavité présente un volume inférieur au volume maximal, la face externe formant au moins une partie de la surface aérodynamique lorsque la cavité est à l'état gonflé.

Cette structure aérodynamique gonflable présente une masse volumique nettement inférieure à celle d'une structure aérodynamique de l'art antérieur et peut être mise en place plus simplement que cette dernière.

Selon une autre caractéristique, la structure aérodynamique comprend plusieurs parois souples reliées entre elles de manière étanche.

Selon une autre caractéristique, la structure aérodynamique comprend des mailles internes reliant chacune deux parois souples.

Selon une autre caractéristique, la structure aérodynamique comprend plusieurs cavités dont au moins une est gonflable.

Selon une autre caractéristique, la structure aérodynamique comprend :
- une première cavité gonflable délimitée par des première et deuxième parois souples comportant des premiers bords latéraux reliés de manière étanche entre eux et au support ainsi que des deuxièmes bords latéraux reliés de manière étanche entre eux et au support, la première paroi souple comportant une face externe qui présente, lorsque la première cavité est à l'état gonflé, une géométrie identique à celle de la surface aérodynamique,
- une deuxième cavité séparée de la première cavité par la deuxième paroi souple et délimitée par cette dernière et le support,
- des mailles internes, situées dans la première cavité, reliant les première et deuxième parois.

Selon une autre caractéristique, la structure aérodynamique comprend au moins des première et deuxième cavités gonflables, les première et deuxième cavités gonflables présentant chacune au moins des première, deuxième et troisième parois souples ; les premières parois souples des première et deuxième cavités formant au moins une partie de la surface aérodynamique de la structure aérodynamique, les deuxièmes parois souples des première et deuxième cavités étant plaquées contre le support, les troisièmes parois souples des première et deuxième cavités étant plaquées l'une contre l'autre.

Selon une autre caractéristique, la structure aérodynamique comprend au moins un film recouvrant au moins partiellement la face externe de la paroi souple.

Selon une autre caractéristique, le système de liaison comprend au moins un film de liaison intercalé entre au moins l'une des parois souples et le support.

Selon une autre caractéristique, la structure aérodynamique comprend plusieurs systèmes de liaison.

Selon une autre caractéristique, au moins un système de liaison comprend une glissière qui présente un logement longiligne relié au support ainsi qu'un jonc ou un insert relié à au moins une des parois souples et configuré pour être positionné dans le logement longiligne, ledit logement longiligne comportant une ouverture rétrécie avec une section inférieure à celle du jonc ou de l'insert.

Selon une autre caractéristique, au moins un système de liaison comprend au moins un profilé distinct du support et relié par des éléments de fixation au support, au moins une paroi souple coopérant avec ledit profilé.

Selon une autre caractéristique, la structure aérodynamique comprend au moins un système de régulation de pression configuré pour réguler la pression du fluide présent dans ladite au moins une cavité gonflable.

Selon une autre caractéristique, le système de régulation de pression comprend une alimentation en fluide sous pression ainsi qu'au moins une commande, activable ou tarée, configurée pour autoriser ou non un écoulement d'un fluide contenu dans l'alimentation en fluide sous pression vers la cavité.

Selon une autre caractéristique, le système de régulation de pression est configuré pour réguler la pression du fluide présent dans la cavité gonflable de sorte que la surface aérodynamique conserve une géométrie constante.

Selon une autre caractéristique, le système de régulation de pression est configuré pour réguler la pression du fluide présent dans la cavité gonflable de sorte que la surface aérodynamique présente une géométrie qui varie.

Selon une autre caractéristique, la structure aérodynamique est de type Karman.

D'autres caractéristiques et avantages ressortiront de la description de l'invention qui va suivre, description donnée à titre d'exemple uniquement, en regard des dessins annexés parmi lesquels :
- La figure 1 est une vue latérale d'un aéronef,
- La figure 2 est une coupe schématique d'une partie d'un aéronef comprenant une structure aérodynamique gonflable illustrant un mode de réalisation de l'invention,
- La figure 3 est une coupe schématique d'une partie d'un aéronef comprenant une structure aérodynamique gonflable illustrant un autre mode de réalisation de l'invention,
- La figure 4 est une coupe schématique d'une partie d'un aéronef comprenant une structure aérodynamique gonflable illustrant un autre mode de réalisation de l'invention,
- La figure 5 est une coupe schématique d'une partie d'un aéronef comprenant une structure aérodynamique gonflable illustrant un autre mode de réalisation de l'invention,
- La figure 6 est une coupe schématique d'une partie d'un aéronef comprenant une structure aérodynamique gonflable illustrant un autre mode de réalisation de l'invention,
- La figure 7 est une coupe schématique d'une partie d'un aéronef comprenant une structure aérodynamique gonflable illustrant un autre mode de réalisation de l'invention,
- La figure 8 est une coupe schématique d'une partie d'un aéronef comprenant une structure aérodynamique gonflable illustrant un autre mode de réalisation de l'invention,
- La figure 9 est une coupe schématique d'un système de liaison reliant une structure aérodynamique gonflable et un support d'un aéronef illustrant un mode de réalisation de l'invention,
- La figure 10 est une coupe schématique d'un système de liaison reliant une structure aérodynamique gonflable et un support d'un aéronef illustrant un autre mode de réalisation de l'invention,
- La figure 11 est une coupe schématique d'un système de liaison reliant une structure aérodynamique gonflable et un support d'un aéronef illustrant un autre mode de réalisation de l'invention,
- La figure 12 est une coupe schématique d'un système de liaison reliant une structure aérodynamique gonflable et un support d'un aéronef illustrant un autre mode de réalisation de l'invention,
- La figure 13 est une coupe schématique d'une partie d'un aéronef comprenant une structure aérodynamique gonflable et un système d'alimentation en fluide externe illustrant un mode de réalisation de l'invention,
- La figure 14 est une coupe schématique d'une partie d'un aéronef comprenant une structure aérodynamique gonflable et un système d'alimentation en fluide interne illustrant un mode de réalisation de l'invention,
- La figure 15 est une coupe schématique d'une structure aérodynamique gonflable à différents états illustrant un mode de réalisation de l'invention.

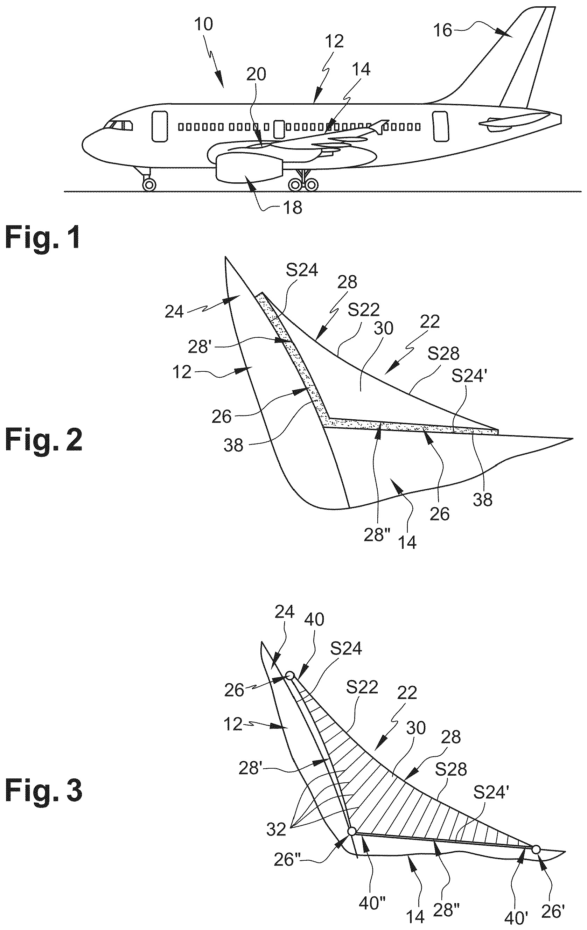

Selon un mode de réalisation visible sur la figure 1, un aéronef 10 comprend un fuselage 12, des ailes 14 positionnées de part et d'autre du fuselage 12, un empennage 16 situé à l'extrémité arrière du fuselage 12 ainsi que des ensembles de propulsion 18 situés sous les ailes 14 et reliés à ces dernières par des mâts 20.

Comme illustré sur la figure 2, l'aéronef 10 comprend une structure aérodynamique 22, comme une structure de type Karman par exemple, au niveau d'une zone de jonction entre le fuselage 12 et chaque aile 14. Cette structure aérodynamique est dite non-structurelle dans la mesure où elle n'assure pas de fonction mécanique et la transmission d'efforts Bien entendu, l'invention n'est pas limitée à cette position pour la structure aérodynamique 22.

Quel que soit le mode de réalisation, l'aéronef 10 comprend au moins un support 24 comportant :
- au moins un élément parmi le fuselage 12, une des ailes 14, l'empennage 16, un des ensembles de propulsion 18, un des mâts 20 ou toute autre partie de l'aéronef 10,
- au moins une structure aérodynamique 22,
- au moins un système de liaison 26 reliant la structure aérodynamique 22 et le support 24.

Le support 24 comprend au moins une surface de contact S24 sur laquelle est positionnée la structure aérodynamique 22. Selon un agencement, le support 24 comprend des première et deuxième surfaces de contact S24, S24' contre lesquelles est positionnée la structure aérodynamique 22. Selon cet agencement, la première surface de contact S24 correspond à une partie de la surface extérieure du fuselage 12 et la deuxième surface de contact S24' correspond à une partie de la surface extérieure d'une des ailes 14. Ces première et deuxième surfaces de contact S24, S24' forment un Vé dans un plan transversal.

En variante, le support 24 comprend au moins un point de contact auquel est reliée la structure aérodynamique 22.

La structure aérodynamique 22 présente au moins une surface aérodynamique S22 en contact avec un flux d'air s'écoulant à l'extérieur de l'aéronef 10 en vol. Cette surface aérodynamique S22 présente une géométrie donnée.

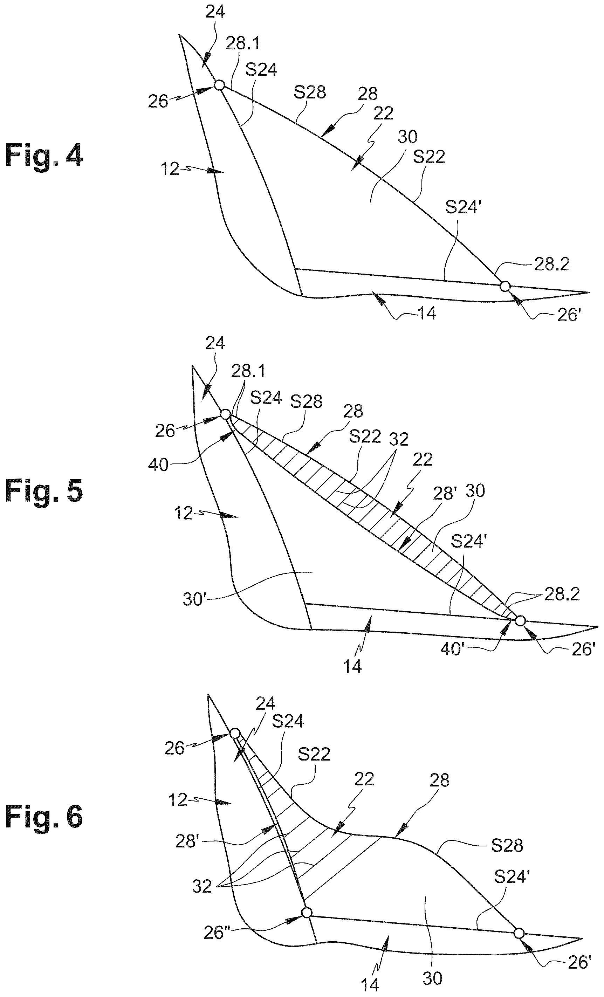

Cette surface aérodynamique S22 peut être plane, concave comme illustré sur les figures 2 et 3, convexe comme illustré sur les figures 4 et 5, présenter une partie convexe et une autre partie concave comme illustré sur la figure 6 ou toute autre géométrie.

La structure aérodynamique 22 comprend au moins une paroi souple 28 délimitant au moins partiellement au moins une cavité 30 gonflable configurée pour occuper un état gonflé dans lequel elle présente un volume maximal et un état dégonflé dans lequel elle présente un volume inférieur au volume maximal. La paroi souple 28 présente une face externe S28 qui forme au moins une partie de la surface aérodynamique S22 lorsque la cavité 30 est à l'état gonflé.

Selon un mode de réalisation visible sur la figure 2, la structure aérodynamique 22 comprend plusieurs parois souples 28, 28, 28" reliées entre elles de manière étanche afin de former une cavité 30 gonflable. Selon ce mode de réalisation visible sur la figure 2, la cavité 30 ne comprend aucun renfort ou maillage interne. La structure aérodynamique 22 comprend une première paroi 28 comportant une face externe S28 qui présente, lorsque la cavité 30 est à l'état gonflé, la même géométrie que celle de la surface aérodynamique S22 et forme ladite surface aérodynamique S22. En complément, la structure aérodynamique 22 comprend des deuxième et troisième parois souples 28', 28" plaquées contre le support 24.

Selon un autre mode de réalisation visible sur les figures 3 et 6, la structure aérodynamique 22 comprend des mailles internes 32 reliant chacune deux parois souples 28, 28', 28". La structure aérodynamique 22 comprend une première paroi 28 comportant une face externe S28 qui présente, lorsque la cavité 30 est à l'état gonflé, la même géométrie que celle de la surface aérodynamique S22 et forme ladite surface aérodynamique S22. En complément, la structure aérodynamique 22 comprend des deuxième et troisième parois souples 28', 28" plaquées contre le support 24.

Pour la présente demande, on entend par une maille interne 32 un élément de jonction souple, inextensible, reliant deux parois souples 28, 28', 28". Ainsi, les mailles internes 32 peuvent être des nervures, des fils, des sangles ou autres.

Selon une configuration visible sur la figure 3, les mailles internes 32 occupent tout l'espace intérieur de la cavité 30. Selon une autre configuration visible sur la figure 6, les mailles internes 32 occupent seulement une partie de l'espace intérieur de la cavité 30.

Selon un mode de réalisation, chaque paroi souple 28, 28', 28" comprend un empilage de plusieurs couches étanches accolées les unes aux autres. Chaque paroi souple 28, 28', 28" peut être réalisée en un matériau inextensible ou extensible, transparent ou non et peut être ou non renforcée par des fibres ou des tissus résistants aux efforts et aux impacts.

Selon un autre mode de réalisation visible sur la figure 4, la structure aérodynamique 22 comprend une seule paroi souple 28 qui s'étend entre des premier et deuxième bords latéraux 28.1, 28.2 reliés de manière étanche avec le support 24. Selon ce mode de réalisation, la cavité 30 gonflable est délimitée par la paroi souple 28 et le support 24.

Selon un autre mode de réalisation visible sur la figure 5, la structure aérodynamique 22 comprend plusieurs cavités 30, 30' dont au moins une est gonflable. Selon un agencement, la structure aérodynamique 22 comprend :
- une première cavité 30 gonflable délimitée par des première et deuxième parois souples 28, 28' reliées de manière étanche au support 24, la première paroi souple 28 comportant une face externe qui présente, lorsque la première cavité 30 est à l'état gonflé, la même géométrie que celle de la surface aérodynamique S22,
- une deuxième cavité 30' séparée de la première cavité 30 par la deuxième paroi souple 28' et délimitée par cette dernière et le support 24.

Selon ce mode de réalisation, les première et deuxième parois souples 28, 28' comprennent des premiers bords latéraux 28.1 reliés de manière étanche entre eux et reliés au support 24 ainsi que des deuxièmes bords latéraux 28.2 reliés de manière étanche entre eux et reliés au support 24. Selon un agencement, la structure aérodynamique 22 comprend des mailles internes 32, situées dans la première cavité 30, reliant les première et deuxième parois 28, 28'. Selon cet agencement, les première et deuxième parois 28, 28' forment un panneau rigide lorsque la première cavité 30 est à l'état gonflé.

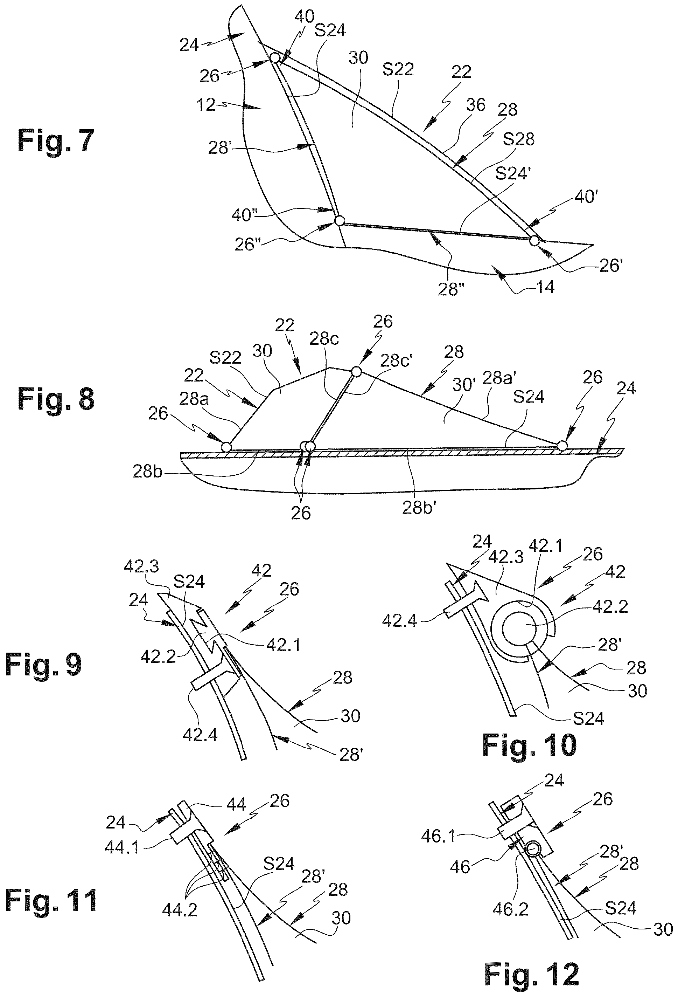

Selon un autre mode de réalisation visible sur la figure 8, la structure aérodynamique 22 comprend au moins des première et deuxième cavités 30, 30' gonflables, la première cavité gonflable 30 présentant au moins des première, deuxième et troisième parois souples 28a, 28b, 28c, la deuxième cavité gonflable 30' présentant au moins des première, deuxième et troisième parois souples 28a', 28b', 28c' ; les premières parois souples 28a, 28a' des première et deuxième cavités 30, 30' formant au moins une partie de la surface aérodynamique S22 de la structure aérodynamique 22, les deuxièmes parois souples 28b, 28b' des première et deuxième cavités 30, 30' étant plaquées contre le support 24, les troisièmes parois souples 28c, 28c' des première et deuxième cavités 30, 30' étant plaquées l'une contre l'autre. Selon un mode de réalisation visible sur la figure 7, la structure aérodynamique 22 comprend au moins une plaque ou feuille 36 rigide recouvrant au moins partiellement la face externe S28 de la paroi souple 28. Cette plaque ou feuille 36 peut être métallique ou en matériau composite et recouvrir toute la paroi souple 28. Elle forme une surface aérodynamique qui est appuyée contre la structure aérodynamique 22 et permet à cette dernière de conserver une forme donnée.

Selon un mode de réalisation visible sur la figure 2, le système de liaison 26 comprend au moins un film de liaison 38, comme un film de colle ou une bande auto-agrippante de type Velcro ^{®} par exemple, intercalé entre au moins l'une des parois souples 28', 28" et le support 24. Ce type de système de liaison 26 est de type surfacique.

Selon un autre mode de réalisation visible sur les figures 3, 4 à 8, la structure aérodynamique 22 comprend plusieurs systèmes de liaison 26, 26', 26" de type linéaire qui s'étendent chacun selon une ligne.

Selon le mode de réalisation visible sur la figure 4, lorsque la structure aérodynamique 22 comprend une seule paroi souple 28 qui s'étend entre des premier et deuxième bords latéraux 28.1, 28.2, ladite structure aérodynamique 22 comprend des premier et deuxième systèmes de liaison 26, 26' qui s'étendent chacune le long des premier et deuxième bords latéraux 28.1, 28.2.

Selon le mode de réalisation visible sur la figure 5, lorsque la structure aérodynamique 22 comprend des première et deuxième parois souples 28, 28' qui présentent des premiers bords latéraux 28.1 reliés de manière étanche entre eux au niveau d'une première zone de jonction 40 ainsi que des deuxièmes bords latéraux 28.2 reliés de manière étanche entre eux au niveau d'une deuxième zone de jonction 40', ladite structure aérodynamique 22 comportant des premier et deuxième systèmes de liaison 26, 26' qui s'étendent chacun le long des première et deuxième zones de jonction 40, 40'.

Selon les modes de réalisation visibles sur les figures 3 et 7, lorsque la structure aérodynamique 22 comprend plusieurs parois souples 28, 28', 28" reliées deux à deux au niveau de zones de jonction 40, 40', 40", ladite structure aérodynamique 22 comporte, pour chaque zone de jonction 40, 40', 40", un système de liaison 26, 26', 26' qui s'étend le long de ladite zone de jonction 40, 40', 40".

Bien entendu, l'invention n'est pas limitée à ces nombres ou à ces emplacements pour les systèmes de liaison 26, 26', 26".

Selon des configurations visibles sur les figures 9 et 10, au moins un système de liaison 26, 26', 26" comprend une glissière 42 qui présente un logement longiligne 42.1 relié au support 24 ainsi qu'un jonc ou un insert 42.2 longiligne relié à au moins une des parois souples 28, 28', 28" et configuré pour être positionné dans le logement longiligne 42.1, ledit logement longiligne 42.1 comportant une ouverture rétrécie avec une section inférieure à celle du jonc ou de l'insert 42.2. Selon une première configuration visible sur la figure 9, le logement 42.1 et le jonc 42.2 ont des sections en queue d'aronde. Selon une deuxième configuration visible sur la figure 10, le logement 42.1 et le jonc 42.2 ont des sections circulaires.

Selon les premier et deuxième modes de réalisation, la glissière 42 comprend au moins un profilé 42.3, distinct du support 24, qui est relié à ce dernier par des éléments de fixation 42.4, comme des vis ou des rivets par exemple, et présente le logement 42.1.

Selon une autre configuration visible sur la figure 11, au moins un système de liaison 26, 26', 26" comprend un profilé 44 relié au support 24 par des premiers éléments de fixation 44.1 comme des vis ou des rivets par exemple, la (ou les) paroi(s) souple(s) 28, 28', 28" étant reliée audit profilé 44 par des deuxièmes éléments de fixation 44.2 comme des coutures par exemple.

Selon une autre configuration visible sur la figure 12, au moins un système de liaison 26, 26', 26" comprend un profilé 46 relié au support 24 par des éléments de fixation 46.1 comme des vis ou des rivets par exemple, la (ou les) paroi(s) souple(s) 28, 28', 28" présentant un jonc 46.2 pincé entre le profilé 46 et le support 24. Ce profilé 46 peut être monobloc ou comprendre plusieurs éléments assemblés.

Selon ces différents modes de réalisation, au moins un système de liaison 26, 26', 26" comprend au moins un profilé 42.3, 44, 46 distinct du support 24 et relié par des éléments de fixation 42.4, 44.1, 46.1 au support 24, au moins une paroi souple 28, 28', 28" coopérant avec ledit profilé 42.3, 44, 46.

Bien entendu, l'invention n'est pas limitée à ces configurations pour le système de liaison 26, 26', 26". Ainsi, au moins un système de liaison 26, 26', 26" pourrait être, par exemple, une charnière avec ou sans axe amovible, une fermeture à glissière ou une bande auto-agrippante de type Velcro ^{®}. Ce système de liaison pourrait aussi être une bande de colle.

En fonctionnement, au moins une cavité 30, 30' gonflable contient un fluide qui présente une pression supérieure ou égale à 0,25 bar à l'état gonflé.

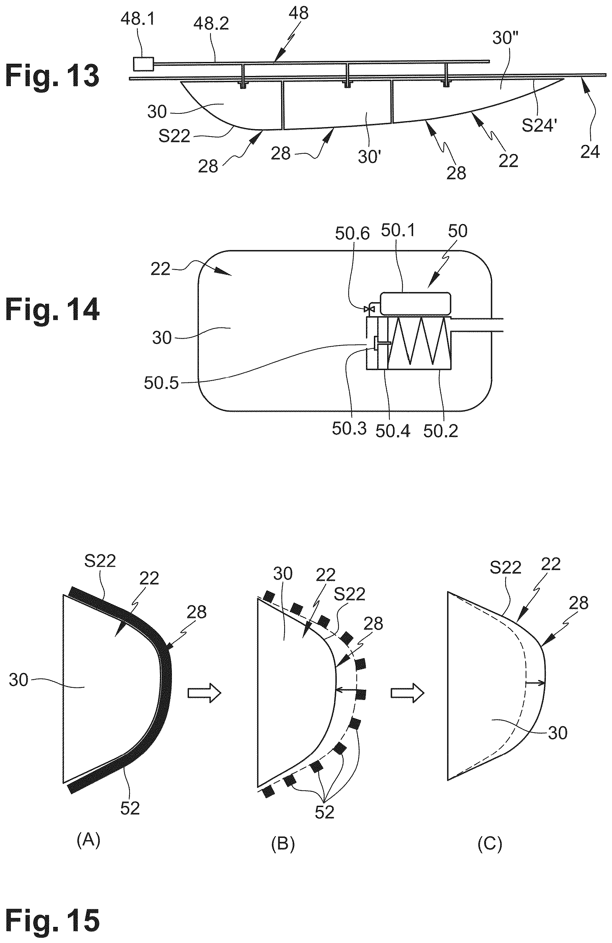

Selon des modes de réalisation visibles sur les figures 13 et 14, la structure aérodynamique 22 comprend au moins un système de régulation de pression 48 configuré pour réguler la pression du fluide présent dans au moins une cavité 30, 30' gonflable.

Selon un mode de réalisation visible sur la figure 13, le système de régulation de pression 48 est situé à l'extérieur de la cavité 30. Selon ce mode de réalisation, le système de régulation de pression 48 comprend une alimentation en fluide sous pression 48.1, au moins un conduit 48.2 reliant ladite alimentation en fluide sous pression 48.1 et la cavité 30, ainsi qu'au moins une commande activable ou tarée, comme une vanne, un détendeur ou une soupape par exemple, configurée pour autoriser ou non l'écoulement d'un fluide contenu dans l'alimentation en fluide sous pression 48.1 vers la cavité 30. Selon une configuration, le système de régulation de pression 48 comprend un réseau de conduits 48.2 reliant la même alimentation en fluide sous pression et plusieurs cavités 30, 30', 30".

Selon un autre mode de réalisation visible sur la figure 14, au moins une cavité 30 gonflable comprend son propre système de régulation de pression 50 positionné à l'intérieur de la cavité 30. Selon ce mode de réalisation, le système de régulation de pression 50 comprend un réservoir de gaz comprimé 50.1, un vase d'expansion 50.2, une soupape 50.3, un piston 50.4 situé dans le vase d'expansion 50.2, un orifice 50.5 configuré pour être obturé par la soupape 50.3 et faire communiquer l'intérieur de la cavité 30 et l'intérieur du vase d'expansion 50.2 ainsi qu'un robinet 50.6 actionnable permettant de faire communiquer le réservoir de gaz comprimé 50.1 et l'intérieur du vase d'expansion 50.2. Lorsque la pression à l'intérieur de la cavité 30 est supérieure à une première valeur seuil, le piston 50.4 se décale vers la droite et permet au gaz de s'écouler via l'orifice 50.5 de la cavité 30 vers le vase d'expansion 50.2. Lorsque la pression à l'intérieur de la cavité 30 est inférieure à une deuxième valeur seuil, le piston 50.4 se décale vers la gauche et provoque l'ouverture du robinet 50.6.

Bien entendu, l'invention n'est pas limitée à ces modes de réalisation pour le système de régulation de pression 48, 50.

Selon un premier mode de fonctionnement, le système de régulation de pression 48, 50 est configuré pour réguler la pression dans la cavité 30 gonflable de sorte que la surface aérodynamique S22 conserve une géométrie constante.

Selon un deuxième mode de fonctionnement visible sur la figure 15, le système de régulation de pression 48, 50 est configuré pour réguler la pression dans la cavité 30 gonflable de sorte que la surface aérodynamique S22 présente une géométrie qui varie. Ainsi, la surface aérodynamique S22 occupe un premier état expansé lorsque la cavité 30 est à l'état gonflé et un deuxième état contracté lorsque la cavité 30 est à l'état dégonflé.

Selon une application, il est possible de dégivrer la surface aérodynamique S22 en la dégonflant et en la regonflant. Comme illustré sur la partie (A) de la figure 15, du givre 52 peut se former sur la surface aérodynamique S22 lorsque la cavité 30 est à l'état gonflé. Il est possible de fragmenter le givre 52 en dégonflant la cavité 30, comme illustré sur la partie (B) de la figure 15. En raison de cette fragmentation du givre 52 et des écoulements aérodynamiques sur la surface aérodynamique S22, le givre 52 est retiré de ladite surface aérodynamique S22. Comme illustré sur la partie (C) de la figure 15, la cavité 30 est alors regonflée de sorte que la surface aérodynamique S22 retrouve sa géométrie initiale.

Selon un autre mode de fonctionnement, la géométrie de la surface aérodynamique S22 est modifiée en régulant la pression à l'intérieur de la cavité 30 afin de l'adapter en fonction des phases de vol et d'optimiser les performances aérodynamiques. Selon ce mode de fonctionnement, la paroi souple 28 formant la surface aérodynamique S22 peut être extensible ou élastique. Le contrôle de la géométrie de la surface aérodynamique S22 peut être de type actif comme dans le cas de la fonction de dégivrage précédemment décrite. En variante, le contrôle de la géométrie de la surface aérodynamique S22 peut être de type passif. Selon cette variante, la géométrie varie en fonction de la différence de pression entre la pression interne présente dans la cavité 30 qui est constante, contrairement à la pression externe qui varie en fonction de l'altitude de l'aéronef.

La structure aérodynamique 22 gonflable de l'invention présente une masse volumique nettement inférieure à celle d'une structure aérodynamique de l'art antérieur et peut être mise en place plus simplement que cette dernière.

Dans la mesure où cette structure aérodynamique 22 gonflable peut être en un matériau transparent aux ondes électromagnétiques, elle peut être utilisée pour recouvrir une antenne ou un radar.

La structure aérodynamique 22 peut être réalisée en une matière transparente si bien qu'elle peut recouvrir un projecteur, un feu de position, tout autre signal lumineux ou au moins un hublot.

Enfin, cette structure aérodynamique 22 peut être utilisée pour simuler des modifications aérodynamiques en faisant varier sa géométrie afin, par exemple, de simuler une accumulation de givre de façon réversible et variable lors d'essais en vol.

## Revendications

1. Aéronef comprenant au moins un support (24), au moins une structure aérodynamique (22) qui présente au moins une surface aérodynamique (S22) ainsi qu'au moins un système de liaison (26) reliant la structure aérodynamique (22) et le support (24) ; **caractérisé en ce que** la structure aérodynamique (22) comprend au moins une paroi souple (28) présentant une face externe (S28) ainsi qu'au moins une cavité (30) gonflable délimitée au moins partiellement par la paroi souple (28) et configurée pour occuper un état gonflé dans lequel la cavité (30) présente un volume maximal et un état dégonflé dans lequel la cavité (30) présente un volume inférieur au volume maximal, la face externe (S28) formant au moins une partie de la surface aérodynamique (S22) lorsque la cavité (30) est à l'état gonflé.

2. Aéronef selon la revendication 1, **caractérisé en ce que** la structure aérodynamique (22) comprend plusieurs parois souples (28, 28, 28") reliées entre elles de manière étanche.

3. Aéronef selon la revendication précédente, **caractérisé en ce que** la structure aérodynamique (22) comprend des mailles internes (32) reliant chacune deux parois souples (28, 28').

4. Aéronef selon l'une des revendications précédentes, **caractérisé en ce que** la structure aérodynamique (22) comprend plusieurs cavités (30, 30') dont au moins une est gonflable.

5. Aéronef selon la revendication précédente, **caractérisé en ce que** la structure aérodynamique (22) comprend :
- une première cavité (30) gonflable délimitée par des première et deuxième parois souples (28, 28') comportant des premiers bords latéraux (28.1) reliés de manière étanche entre eux et au support (24) ainsi que des deuxièmes bords latéraux (28.2) reliés de manière étanche entre eux et au support (24), la première paroi souple (28) comportant une face externe qui présente, lorsque la première cavité (30) est à l'état gonflé, une géométrie identique à celle de la surface aérodynamique (S22),
- une deuxième cavité (30') séparée de la première cavité (30) par la deuxième paroi souple (28') et délimitée par cette dernière et le support (24),
- des mailles internes (32), situées dans la première cavité (30), reliant les première et deuxième parois (28, 28').

6. Aéronef selon la revendication 4, **caractérisé en ce que** la structure aérodynamique (22) comprend au moins des première et deuxième cavités (30, 30') gonflables, les première et deuxième cavités gonflables (30) présentant chacune au moins des première, deuxième et troisième parois souples (28a, 28b, 28c) ; les premières parois souples (28a, 28a') des première et deuxième cavités (30, 30') formant au moins une partie de la surface aérodynamique (S22) de la structure aérodynamique (22), les deuxièmes parois souples (28b, 28b') des première et deuxième cavités (30, 30') étant plaquées contre le support (24), les troisièmes parois souples (28c, 28c') des première et deuxième cavités (30, 30') étant plaquées l'une contre l'autre.

7. Aéronef selon l'une des revendications précédentes, **caractérisé en ce que** la structure aérodynamique (22) comprend au moins une plaque ou feuille (36) recouvrant au moins partiellement la face externe (S28) de la paroi souple (28).

8. Aéronef selon l'une des revendications précédentes, **caractérisé en ce que** le système de liaison (26) comprend au moins un film de liaison (38) intercalé entre au moins l'une des parois souples (28', 28") et le support (24).

9. Aéronef selon l'une des revendications 1 à 7, **caractérisé en ce que** la structure aérodynamique (22) comprend plusieurs systèmes de liaison (26, 26', 26").

10. Aéronef selon la revendication précédente, **caractérisé en ce qu'**au moins un système de liaison (26, 26', 26") comprend une glissière (42) qui présente un logement longiligne (42.1) relié au support (24) ainsi qu'un jonc ou un insert (42.2) relié à au moins une des parois souples (28, 28', 28") et configuré pour être positionné dans le logement longiligne (42.1), ledit logement longiligne (42.1) comportant une ouverture rétrécie avec une section inférieure à celle du jonc ou de l'insert (42.2).

11. Aéronef selon l'une des revendications 9 à 10, **caractérisé en ce qu'**au moins un système de liaison (26, 26', 26") comprend au moins un profilé (42.3, 44, 46) distinct du support (24) et relié par des éléments de fixation (42.4, 44.1, 46.1) au support (24), au moins une paroi souple (28, 28', 28") coopérant avec ledit profilé (42.3, 44, 46).

12. Aéronef selon l'une des revendications précédentes, **caractérisé en ce que** la structure aérodynamique (22) comprend au moins un système de régulation de pression (48) qui comporte une alimentation en fluide sous pression (48.1, 50.1) ainsi qu'au moins une commande, activable ou tarée, configurée pour réguler la pression du fluide présent dans au moins une cavité (30, 30') gonflable.
